# EUROPEAN PATENT SPECIFICATION

(11) **EP 1 659 302 B1**
(45) Date of publication and mention of the grant of the patent: **05.03.2008**
(21) Application number: 05257016.5
(22) Date of filing: 14.11.2005
(51) Int. Cl.: F16C 5/00, F04B 53/14, F01B 9/02

(54) **Connection means between rod and crosshead for a reciprocating machine**
Verbindung zwischen Kolbenstange und Querspritzkopf einer hin- und hergehenden Maschine
Dispositif de connexion pour tête d'équerre et bielle pour machine à mouvement alternatif

(30) Priority: 17.11.2004 IT MI20042204
(43) Date of publication of application: 24.05.2006
(73) Proprietor: Nuovo Pignone Holding S.P.A., 50127 Florence (IT)
(72) Inventor: Graziani, Franco, 50136 Florence (IT); Falciani, Fabio, 50124 Florence (IT); Pratesi, Simone, 50039 Vicchio (Florence) (IT)
(74) Representative: Pedder, James Cuthbert

(56) References cited:
- EP-A- 0 393 770
- EP-A- 0 434 607
- DE-C1- 10 048 701
- DE-U1- 29 800 522
- FR-A- 709 490
- GB-A- 327 150
- US-A- 1 835 662

## Description

The present invention relates to connection means between rod and cross head for a reciprocating machine, in particular for a reciprocating compressor.

In reciprocating compressors in which a connecting rod is connected to a relative piston by means of a cross head and a corresponding rod, the connection means between rod and cross head represent a critical factor for the reliability, useful life and performances of the reciprocating machine.

In particular, the connection means influence the reliability and useful life of an sealing system situated between a cylinder, inside which said piston slides, and said rod to prevent the passage of gas from the cylinder towards the connection means.

Said sealing system comprises a series of elements subject to wear which are integral with the cylinder and are also in contact with the rod which slides axially with respect to the cylinder, this being attached to the piston.

Said series of elements of said sealing system have a useful life which depends on the state of stress to which they are subjected during the running of the reciprocating machine.

Said series of elements of said sealing system are, in fact, normally subject to wear due to the friction caused by the dynamic stress induced by the cyclic loads characteristic of the functioning of reciprocating machines.

The friction and consequently also the wear of the elements of the sealing system, are particularly marked above all in the case of an axial displacement of the rod with respect to the fixed parts, in particular with respect to a cylinder in which said piston connected to said rod, slides.

As a result of wear, the elements of the sealing system therefore require maintenance operations and periodical controls until their replacement when they no longer respect the requisites required for guaranteeing an efficient functioning of the reciprocating machine.

In order to overcome this drawback, the connection means must consequently ensure a correct centering of the rod with respect to the cylinder to reduce wear as much as possible of the elements of the sealing system, subject to wear.

In order to maximize the useful life of the components subject to wear of the sealing system for gases produced in the cylinder, it is extremely important to maintain a coaxiality error lower than a pre-established maximum value, as occurs in some reference regulations for reciprocating compressors.

As the cross head is connected to the rod by connection means, in order to make the rod and cylinder co-axial, it is necessary to effect centering operations which can correct coaxiality errors.

A first drawback is that these operations are effected in the manufacturing phase and during each maintenance or control operation in which the components are dismantled and assembled.

Said coaxiality errors or shifts are evaluated on a level orthogonal to the axis of the rod or cross head with respect to two directions orthogonal to each other, by means of a run-out measurement.

The term "run-out" refers to the variation in measurements obtained by comparators, integral with the fixed part (cylinder) and in contact with the rod, during the sliding of the rod along its specific run.

In this way, a vertical shift and a horizontal shift are defined, which must be corrected in order to obtain coaxiality between rod, mobile part, and cylinder, fixed part.

As each element of the connection means, situated between said rod and said cylinder, have operating margins, it creates a small coaxiality error between the rod and cylinder.

The total vertical and horizontal shift between the rod and cylinder are therefore given by the algebraic sum of all the vertical and horizontal shifts respectively of the elements connecting the rod to the cross head.

Another consequent drawback is that for large-dimensional reciprocating machines, the manufacturing margins of the single components can cause a coaxiality error and consequently also a horizontal and vertical run-out, which exceed the limits established. Previous attempts to provide a suitable connection means have been shown in DE-A-29800522 and DE-A-10048701

An objective of the present invention is to provide connection means between the rod and cross head of a reciprocating machine, such as, for example, a reciprocating compressor, which avoid onerous centering and registration operations for making them coaxial during their maintenance or that of the reciprocating machine.

A further objective is to provide connection means between the rod and cross head of a reciprocating machine which allows an increase in the useful life and reliability of the components subject to wear.

Another objective is to provide connection means between the rod and cross head of a reciprocating machine which allows a reduction in the maintenance times and costs for substituting the elements subject to wear.

Yet another objective is to provide connection means between the rod and cross head of a reciprocating machine which allows an easy centering of the components during the running of the compressor itself and during its maintenance operations.

A further objective is to provide connection means between the rod and cross head of a reciprocating machine which are simple and reliable.

These objectives according to the present invention are achieved by providing connection means between the rod and cross head of a reciprocating machine as specified in claim 1.

Further characteristics of the invention are indicated in the subsequent claims.

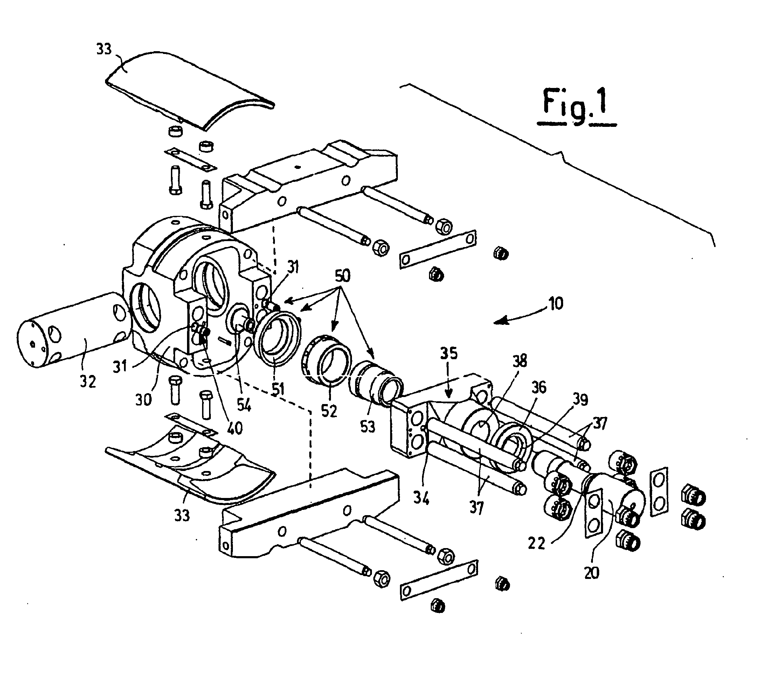

The invention will now be described in greater detail, by way of example, with reference to the drawings, in which:-
Figure 1 is a raised exploded left-side view of a preferred embodiment of connection means between the rod and cross head for a reciprocating machine, in particular for a reciprocating compressor, according to the present invention;

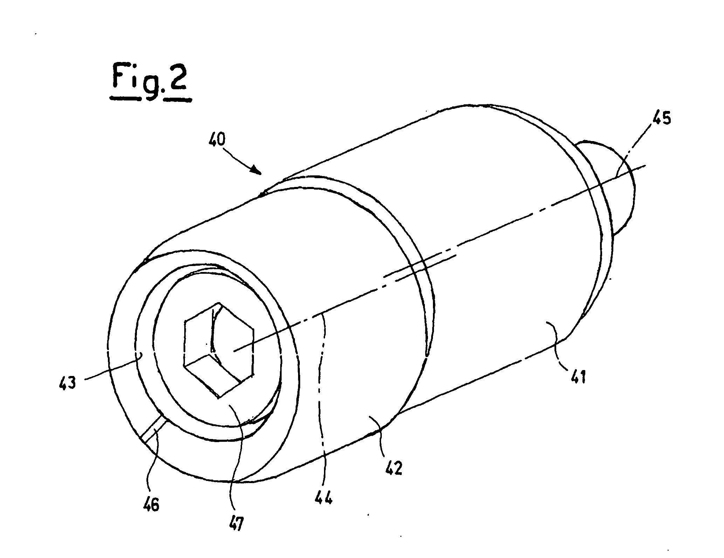

Figure 2 is a raised perspective left-side view of a detail of figure 1;

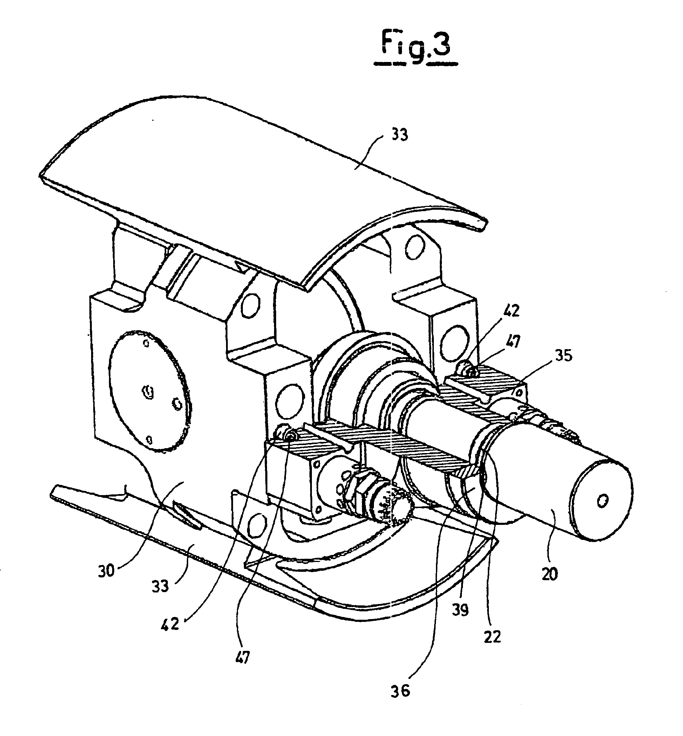

Figure 3 is partially sectional raised perspective left-side view which shows the connection means of figure 1;
Figure 4 is a sectional view of a detail of a reciprocating machine showing a sealing system.

With reference to the figures, these show connection means 10 between rod 20 and cross head 30 for a reciprocating machine, in particular for a reciprocating compressor, said connection means 10 comprising a flange 35.

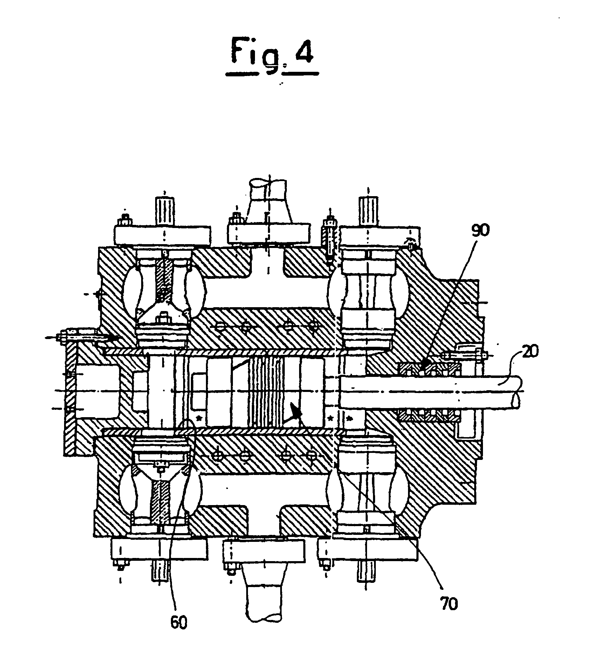

Said rod 20 is preferably connected to a piston 70 sliding inside a cylinder 60 of a reciprocating machine shown in figure 4, whereas said cross head 30 is connected to a connecting rod by means of a pin 32.

Said flange 35 has a central pass-through hole 38, preferably axial, and is also fixed to said cross head 30 equipped with sliding blocks 33 preferably by means of fixing means such as, for example, a series of tie-rods 37.

Said connection means 10 comprise a series of eccentric positioning pins 40, preferably two, situated between said cross head 30 and said flange 35, to make said cross head 30 and said central pass-through hole 38 of said flange 35 in which said rod 20 is inserted, coaxial i.e. to allow a coaxiality error between said cross head 30 and said rod 20 within a prescribed leeway range.

In this way, it is possible to correct the axial displacement or eccentricity between said rod 20 and said cylinder 60 within a pre-established limit.

The purpose of this is to reduce the wear of a sealing system 90 and also to maximize the useful life, consequently reducing maintenance interventions on the reciprocating machine.

Each eccentric positioning pin 40 comprises a first cylindrical portion 41 and a second cylindrical portion 42 integral and eccentric with each other, i.e. said first cylindrical portion 41 has an axis 45 and said second cylindrical portion 42 has a corresponding axis 44, between said axis 45 and said axis 44, there being a pre-established eccentricity.

Said first cylindrical portion 41 and said second cylindrical portion 42 have a pre-established eccentricity between each other and are positioned in corresponding housings situated in said cross head 30 and in said flange 35, respectively.

Said cross head 30 preferably has a series of housings 31 of a number equal to the series of eccentric pins 40, each housing 31 having a bottom in which there is a threaded hole for the fixing of a corresponding eccentric pin 40.

Said flange (35) has preferably a series of housings (34) in even number to the series of eccentric pins (40).

Alternatively, the corresponding threaded holes for fixing the series of eccentric pins 40 can be situated in the housings 34 of said flange 35 instead of in the housings 31 of said cross head 30.

By means of the series of eccentric pins 40, it is possible to said cross head 30 and consequently make it coaxial, in the manufacturing phase, with said flange 35.

Once said eccentric pins 40 have been correctly positioned in the housings 31 of said cross head 30, it is possible to fix said eccentric pins 40 to said cross head 30 preferably by means of a series of screws 47.

Each eccentric pin 40 preferably comprises a reference element 46 for facilitating the positioning in the corresponding housings 31.

Each eccentric pin 40 preferably comprises an axial pass-through hole 43 co-axial with said first cylindrical portion 41 for the insertion of a corresponding fixing screw 47.

In this way, even when dismantling and reassembling said cross head 30 and said flange 35, there is always a perfect coaxiality and a correct positioning between said cross head 30 and said flange 35, in particular between said cross head 30 and said central pass-through hole 38 of said flange 35.

During a maintenance operation, for making said flange 35 and said cross head 30 coaxial, it is advantageously sufficient to couple said flange 35 with the series of eccentric pins 40 fixed to said cross head 30. Furthermore, said connection means 10 preferably comprise a ring 36 centered and fixed on said central pass-through hole 38 of said flange 35 so that it is coaxial with the same.

Said ring 36 is equipped with a truncated-conical internal portion 39 which is coupled and engaged with a corresponding truncated-conical portion 22 of said rod 20.

The purpose of this is to make said rod 20 coaxial to said central pass-through hole 38 of said flange 35, which in turn is made coaxial to said cross head 30 by means of said series of eccentric pins 40.

Said rod 20 is inserted in said ring 36 and furthermore it is inserted in said central pass-through hole 38 of said flange 35.

Said rod 20 moreover is preferably pre-tensioned by means of a clamping , system 50 and then clamped onto the flange 35.

Said clamping system 50 comprises an annular coupling 51 for said rod fitted onto a bearing 52, an annular coupling 53 which is engaged with said flange and a fixing ring nut 54.

On the basis of the present invention, it is sufficient in fact to reassemble and re-tighten the rod 20 as the ring 36, together with the series of positioning pins 40, allows a perfect coaxiality to be obtained between the rod and the cross head, within the limits pre-established by regulations.

In this way, the assembly and dismantling operations of the rod from the cross head 30 are obviously greatly simplified and consequently also the maintenance and control operations thereof, thus reducing both the maintenance and control costs and times.

From the above description, it is evident that, after fixing the cross head 30 to the flange 35, in the manufacturing phase, with the consequent centering phase by means of the series of pins 40, the connection means 10 of the present invention are self-centered and allow a correct positioning between the rod 20 and the cross head 30, also avoiding loss in coaxiality following a dismantling operation.

The present invention therefore avoids the necessity of difficult and onerous centering and registration operations between the rod and cross head following maintenance and/or dismantling operations.

In this way, the useful life of the components subject to wear of a reciprocating compressor and in particular of the sealing system, is maximized, also creating a great increase in the reliability of the reciprocating machine.

This also leads to a consequent reduction in the number of maintenance interventions for the substitution of the components subject to wear, also causing a further saving in terms of cost.

It can thus be seen that the connection means between rod and cross head for a reciprocating compressor according to the present invention achieve the purposes illustrated above and allow both the horizontal and vertical run-out of the rod to be corrected, with respect to the fixed parts of the reciprocating machine, in particular with respect to a cylinder in which a piston connected to the rod itself slides.

This advantageously allows the useful life of a sealing system integral with the cylinder and in contact with the rod, to be maximized.

The connection means between rod and cross head for a reciprocating compressor of the present invention thus conceived can undergo numerous modifications and variants, all included in the same inventive concept.

Furthermore, in practice, the materials used as also their dimensions and components can vary according to technical demands.

## Claims

1. Connection means (10) between the rod (20) and cross head (30) for a reciprocating machine comprising a flange (35) fixed by fixing means (37) to said cross head (30), said rod is connected to a piston (70) sliding inside a cylinder (60) of said reciprocating machine, said flange (35) comprises an axial pass-through hole (38) for the insertion of said rod (20) which is fixed to said flange (35) by means of a clamping system (50), the connecting means comprising a series of eccentrically shaped positioning pins (40) situated between said flange (35) and said cross head (30) to make said rod (20) and said cylinder (60) substantially and permanently coaxial, **characterized in that** each eccentric pin (40) comprises a first cylindrical portion (41) and a second cylindrical portion (42) integral with each other with parallel axes and also having a pre-established eccentricity between each other, the first cylindrical portion (41) and the second cylindrical portion (42) of each eccentric pin (40) being positioned in corresponding housings (31, 34) situated respectively in said cross head (30) and in said flange (35).

2. The connection means (10) according to claim 1, **characterized in that** said housing (31) of said cross head (30) comprises a bottom containing a threaded hole for the fixing of a corresponding eccentric pin (40).

3. The connection means (10) according to claim 1 or 2, **characterized in that** each eccentric pin (40) comprises an axial pass-through hole (43) coaxial with said first cylindrical portion (41) for the insertion of a corresponding fixing screw (47).

4. The connection means (10) according to any of the claims from 1 to 3, **characterized in that** they comprise a ring (36) fixed on said central pass-through hole (38) of said flange (35), said ring (36) being equipped with an internal conical housing (39) which is coupled with a corresponding conical portion (22) of said rod (20) for making said rod (20) and said hole of said flange (35) coaxial.

5. The connection means (10) according to any of the claims from 1 to 4, **characterized in that** each eccentric pin (40) comprises a reference element (46).

6. The connection means (10) according to claim 5, **characterized in that** said reference element (46) is situated on a base surface of said second cylindrical portion (42).

## Patentansprüche

1. Verbindungseinrichtung (10) zwischen der Kolbenstange (20) und dem Kreuzkopf (30) für eine Kolbenmaschine mit einem Flansch (35), der mittels einer Befestigungseinrichtung (37) an dem Kreuzkopf (30) befestigt ist, wobei die Kolbenstange mit einem innerhalb eines Zylinders (60) der Kolbenmaschine gleitenden Kolben (70) verbunden ist, wobei der Flansch (35) ein axiales Durchtrittsloch (38) für die Einführung der Kolbenstange (20) aufweist, welche an dem Flansch (35) mittels eines Klemmsystems (50) befestigt ist, wobei die Verbindungseinrichtung eine Reihe von exzentrisch geformten Positionierungsstiften (40) aufweist, die zwischen dem Flansch (35) und dem Kreuzkopf (30) positioniert sind, um die Kolbenstange (20) und den Zylinder (60) im Wesentlichen und permanent koaxial zu machen, **dadurch gekennzeichnet, dass** jeder exzentrische Stift (40) einen ersten zylindrischen Abschnitt (41) und einen zweiten zylindrischen Abschnitt (42) in einem Stück miteinander mit parallelen Achsen und auch mit einer voreingestellten gegenseitigen Exzentrizität zueinander aufweist, wobei der erste zylindrische Abschnitt (41) und der zweite zylindrische Abschnitt (42) jedes exzentrischen Stiftes (40) in entsprechenden Gehäusen (31, 34) untergebracht sind, die jeweils in dem Kreuzkopf (30) und in dem Flansch (35) angeordnet sind.

2. Verbindungseinrichtung (10) nach Anspruch 1, **dadurch gekennzeichnet, dass** das Gehäuse (31) des Kreuzkopfes (30) eine Unterseite aufweist, welche ein Gewindeloch für die Befestigung eines entsprechenden exzentrischen Stiftes (40) enthält.

3. Verbindungseinrichtung (10) nach Anspruch 1 oder 2, **dadurch gekennzeichnet, dass** jeder exzentrische Stift (40) ein axiales Durchgangsloch (43) koaxial zu dem ersten zylindrischen Abschnitt (41) für die Einführung einer entsprechenden Befestigungsschraube (47) aufweist,

4. verbindungseinrichtung (10) nach einem der Ansprüche 1 bis 3, **dadurch gekennzeichnet, dass** sie einen auf dem zentralen Durchgangsloch (31) des Flansches (35) befestigten Ring (36) aufweist, wobei der Ring (36) mit einem internen konischen Gehäuse (39) ausgestattet ist, welches mit einem entsprechenden konischen Abschnitt (22) der Kolbenstange (20) verbunden ist, um die Kolbenstange (20) und das Loch des Flansches (35) koaxial zu machen.

5. Verbindungseinrichtung (10) nach einem der Ansprüche 1 bis 4, **dadurch gekennzeichnet, dass** jeder exzentrische Stift (40) ein Bezugselement (46) aufweist.

6. Verbindungseinrichtung (10) nach Anspruch 5, **dadurch gekennzeichnet, dass** sich das Bezugselement (46) auf einer Basisoberfläche des zweiten zylindrischen Abschnittes (42) befindet.

## Revendications

1. Moyen de connexion (10) entre la bielle (20) et la crosse de piston (30) pour une machine à mouvement alternatif comprenant une bride (35) fixée par un moyen de fixation (37) à ladite crosse de piston (30), ladite bielle est connectée à un piston (70) qui glisse à l'intérieur d'un cylindre (60) de ladite machine à mouvement alternatif, ladite bride (35) comprend un trou traversant axial (38) pour l'insertion de ladite bielle (20) qui est fixée à ladite bride (35) au moyen d'un système de serrage (50), le moyen de connexion comprenant une série d'axes de positionnement de forme excentrique (40) situés entre ladite bride (35) et ladite crosse de piston (30) pour rendre ladite bielle (20) et ledit cylindre (60) substantiellement coaxiaux de façon permanente, **caractérisé en ce que** chaque axe excentrique (40) comprend une première partie cylindrique (41) et une deuxième partie cylindrique (42) formées d'un seul tenant avec des axes géométriques parallèles et ayant aussi une excentricité préétablie entre elles, la première partie cylindrique (41) et la deuxième partie cylindrique (42) de chaque axe excentrique (40) étant positionnées dans des logements correspondants (31, 34) situés respectivement dans ladite crosse de piston (30) et dans ladite bride (35).

2. Moyen de connexion (10) selon la revendication 1, **caractérisé en ce que** ledit logement (31) de ladite crosse de piston (30) comprend un fond contenant un trou fileté pour la fixation d'un axe excentrique (40) correspondant.

3. Moyen de connexion (10) selon la revendication 1 ou 2, **caractérisé en ce que** chaque axe excentrique (40) comprend un trou traversant axial (43) coaxial avec ladite première partie cylindrique (41) pour l'insertion d'une vis de fixation correspondante (47).

4. Moyen de connexion (10) selon l'une quelconque des revendications 1 à 3, **caractérisé en ce qu'**il comprend une bague (36) fixée sur ledit trou traversant central (38) de ladite bride (35), ladite bague (36) étant pourvue d'un logement interne conique (39) qui est couplé avec une partie conique correspondante (22) de ladite bielle (20) pour rendre coaxiaux ladite bielle (20) et ledit trou de la bride (35).

5. Moyen de connexion (10) selon l'une quelconque des revendications 1 à 4, **caractérisé en ce que** chaque axe excentrique (40) comprend un élément de référence (46).

6. Moyen de connexion (10) selon la revendication 5, **caractérisé en ce que** ledit élément de référence (46) est situé sur une surface de base de ladite deuxième partie cylindrique (42).
